# EUROPEAN PATENT SPECIFICATION

(11) **EP 3 718 836 B1**
(45) Date of publication and mention of the grant of the patent: **04.10.2023**
(21) Application number: 18880563.4
(22) Date of filing: 06.11.2018
(51) Int. Cl.: B60S 5/06, B60L 53/30, B60K 1/04, B60L 53/35, B60L 53/80

(54) **LOCALIZATION MECHANISM AND BATTERY-SWAPPING MECHANISM**
LOKALISIERUNGSMECHANISMUS UND BATTERIEWECHSELMECHANISMUS
MÉCANISME DE LOCALISATION ET MÉCANISME DE PERMUTATION DE BATTERIE

(30) Priority: 27.11.2017 CN 201721605411 U
(43) Date of publication of application: 07.10.2020
(73) Proprietor: NIO (Anhui) Holding Co., Ltd., Hefei City, Anhui Province (CN)
(72) Inventor: TIAN, Xiaotao, Jiading Shanghai (CN); MA, Yongyue, Jiading Shanghai (CN); DING, Xikun, Jiading Shanghai (CN); LI, Nan, Jiading Shanghai (CN)
(74) Representative: Vossius & Partner Patentanwälte Rechtsanwälte mbB
(86) International application number: PCT/CN2018/114123
(87) International publication number: WO 2019/100935

(56) References cited:
- EP-A1- 3 715 194
- CN-A- 106 347 323
- CN-A- 106 926 825
- CN-A- 106 926 825
- CN-A- 107 959 144
- CN-U- 204 659 694
- CN-U- 204 801 748
- CN-U- 206 231 369
- JP-A- 2011 189 909

## Description

### Field of the Invention

The present invention relates to the technical field of battery swap of electric vehicles, in particular to a positioning mechanism for positioning a vehicle and a battery swap mechanism at a battery swap station, and a battery swap mechanism.

### Background of the Invention

At present, a positioning solution of a vehicle and a battery swap mechanism in an automatic battery swap system generally has technical defects such as complicated structure, tedious process and high cost. The technical defects are mainly manifested in several aspects as follows:
1) positioning is performed by a visual positioning system and a vehicle X-axis fine adjustment system, and the structure is relatively complicated;
2) an electric battery pack pin needs to be individually configured with a floating disc, alignment is performed in a manner of marking a floating position during first alignment of the battery pack pin, the process is tedious, and the structure is complicated; and
3) a tightening mechanism and a battery pack are respectively lifted in a stepped lifting manner in a battery swap mechanism, the process is tedious, and the structure is complicated.

CN 106 926 825 A discloses a floating alignment device and method for a battery swapping apparatus. The floating alignment device comprises a floating portion capable of floating within a set range in the case of an external force being introduced; and at least one positioning mechanism being fixedly connected to the floating portion and being capable of limiting the external force. Under the restraints of the limitation, the floating portion can realize the alignment of the at least one positioning mechanism by means of floating. The technical solution solves the problem of realizing, without needing to use manpower for alignment, the simultaneous and accurate alignment of a plurality of locking and unlocking mechanisms with a locking portion of a battery, thereby laying the foundation for the application of a battery swapping apparatus to battery replacement for electric vehicles and even for the development of whole battery swapping stations.

CN 204 801 748 U relates to a lifting apparatus. The lifting apparatus includes a walking device, a lifting system, a floating mechanism, and an unlocking mechanism. The floating mechanism includes a base, a positioning element, and a roller, the base is fixedly coupled to the lifting platform, the positioning element is slidable on the bottom surface of the recess, and the roller is positioned between the bottom surface of the positioning element and the recess. The unlocking mechanism includes an unlocking assembly and a floating platform, the floating platform is provided with positioning hole, and the positioning element is coupled to the floating platform by passing through the positioning hole therein. The lifting system is controlled by the walking device so as to move to a predetermined position, the lift system lifts the device to be carried, such as a battery of an electric car, to a predetermined height, the floating platform is generally used to carry the load of the device, the positioning element of the floating mechanism may be moved in a limited range in the plane to achieve a fine adjustment of the position of the floating platform, thereby enabling the unlocking assembly of the floating mechanism to be accurately placed in a corresponding position, and then the device is unlocked and replaced accurately and fast.

### Summary of the Invention

The invention for which protection is sought is defined by the independent claim. The dependent claims concern particular embodiments.

A purpose of the present invention is to provide a positioning mechanism and a battery swap mechanism with advantages of simple structure, few working processes and low manufacturing cost.

The purpose of the present invention is realized by technical solutions as follows:
A positioning mechanism includes a floating supporting part having a floating space, and a positioning pin, wherein the positioning pin is connected to the floating supporting part; the positioning pin includes at least one of a battery pack pin and a vehicle body pin and is used for fitting with a corresponding positioning hole; and a movable end of the positioning pin retracts to form a guide face, and the guide face is used for guiding the positioning pin into the corresponding positioning hole in a floating state of the floating supporting part.

According to the aforementioned positioning mechanism, the guide face is in the shape of a cone or truncated cone, or a spherical surface.

According to the aforementioned positioning mechanism, under a condition that the positioning pin includes both the battery pack pin and the vehicle body pin, the vehicle body pin is a retractable pin; a height of the vehicle body pin at a maximum extension position is consistent with a height of the battery pack pin, and the vehicle body pin is lower than the floating supporting part during retraction; and the vehicle body pin is used for being matched with the positioning hole in the vehicle body for positioning in an extension state.

According to the aforementioned positioning mechanism, the vehicle body pin is an electric retractable pin.

The present invention further provides a battery swap mechanism, including a lifting mechanism, a tightening mechanism, a positioning mechanism and a floating supporting part;
wherein the tightening mechanism and the positioning mechanism are arranged on the floating supporting part;
the floating supporting part is arranged on the lifting mechanism and can float relative to the lifting mechanism;
the positioning mechanism includes a positioning pin, and the positioning pin includes at least one of a battery pack pin and a vehicle body pin and is used for fitting with a corresponding positioning hole; and
a movable end of the positioning pin retracts to form a guide face, and the guide face is used for guiding the positioning pin into the corresponding positioning hole in a floating state of the floating supporting part.

According to the aforementioned battery swap mechanism, the guide face is in the shape of a cone or truncated cone, or a spherical surface.

According to the aforementioned battery swap mechanism, under a condition that the positioning pin comprises both the battery pack pin and the vehicle body pin, the vehicle body pin is a retractable pin; a height of the vehicle body pin at a maximum extension position is consistent with a height of the battery pack pin, and the vehicle body pin is lower than the floating supporting part during retraction; and the vehicle body pin is used for being matched with the positioning hole in the vehicle body for positioning in an extension state.

According to the aforementioned battery swap mechanism, the vehicle body pin is an electric retractable pin.

The present invention has advantages and effects as follows: in the entire positioning process, there is no need for visual positioning and assistance from a vehicle X-axis fine adjustment mechanism, and positioning can be completed through rough positioning of the vehicle and floating of the pin. No floating disc needs to be individually configured for battery pack positioning; and therefore, the structure is simple, few working processes exist, and the reliability is high. The battery swap mechanism does not need to be entirely lifted, positioning can be realized by virtue of lift of the vehicle, and stepped lifting is avoided. Moreover, the structure is simplified, and manufacturing cost is low.

### Brief Description of the Drawings

Fig. 1 is a structural schematic diagram of a positioning device in the present invention;
Fig. 2 is an operating state diagram I of a positioning device in the present invention;
Fig. 3 is an operating state diagram II of a positioning device in the present invention.

**Reference Signs:**

| | | | |
|---|---|---|---|
| 1: | floating frame | 2: | battery pack pin |
| 3: | vehicle body pin | 4: | tightening mechanism |
| 5: | lifting mechanism | | |

### Detailed Description of the Embodiments

The present invention is further described in detail below, by virtue of specific embodiments and in conjunction with the drawings.

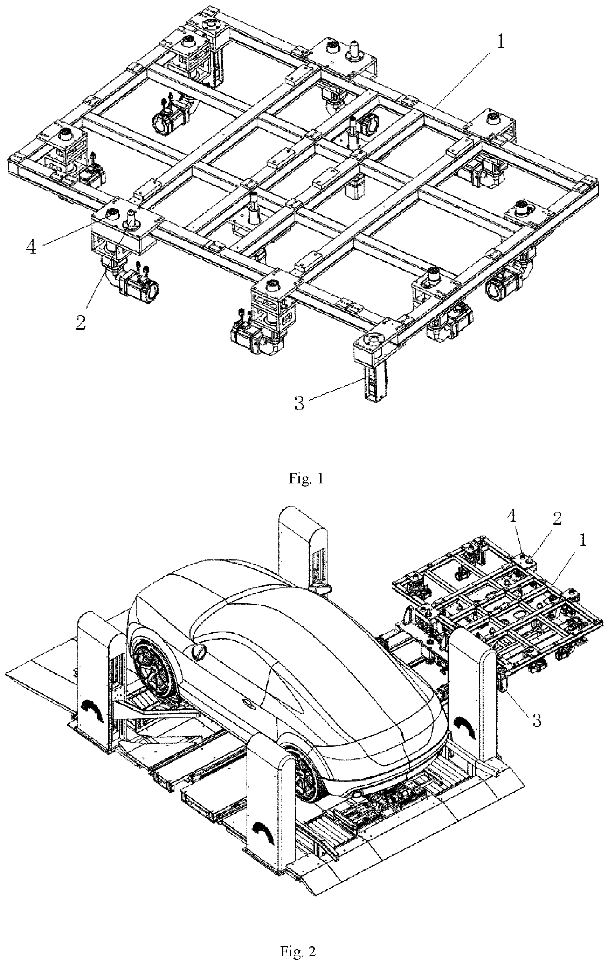

Referring to Fig. 1, the present embodiment provides a positioning mechanism, used for positioning a vehicle and a battery swap mechanism at a battery swap station, and including positioning pin, wherein the positioning pin is connected to a floating frame 1. The floating frame 1 serves as a floating supporting part to be used for supporting the positioning pin, and has a floating space; the positioning pin includes at least two battery pack pins 2 and at least two vehicle body pins 3; and a movable end (an inserted end) of the positioning pin retracts to form a guide face, and the guide face is used for guiding the positioning pin into a positioning hole matched with the positioning pin in a floating state of the floating frame 1. In the following, when a battery pack pin or a vehicle body pin is mentioned, it is intended to be one of the at least two battery pack pins or vehicle body pins.

It should be indicated that, the battery pack pin 2 and the vehicle body pin 3 may also be individually configured to use according to specific circumstances. For example, the battery pack pin 2 is individually configured under a condition that a battery pack is removed; the vehicle body pin 3 is individually configured under a condition that a novel battery pack is installed; and the floating frame 1 may also be of any other supporting structure capable of floating, and the shape is unlimited.

Specifically, the battery pack pin 2 is configured on the floating frame 1 and arranged adjacent to a tightening mechanism 4 mounted on the floating frame 1, and the height of the battery pack pin 2 is greater than that of the tightening mechanism 4 (a tightening sleeve). The battery pack pin 2 is positioned by being inserted into a pin hole, so that the tightening mechanism 4 is aligned at the battery pack (a fastening bolt). The battery pack is removed by the tightening mechanism 4. In the entire positioning process, there is no need for visual positioning and assistance from the vehicle X-axis fine adjustment mechanism, and positioning can be completed through rough positioning of the vehicle and floating of the pin. No battery pack floating disc needs to be individually configured; and therefore, the structure is simple, few working processes exist, and the reliability is high. In the present embodiment, two battery pack pins 2 are installed on the floating frame 1. In actual applications, adjustment may also be performed according to actual requirements, but at least two battery pack pins are generally arranged so as to ensure positioning accuracy.

Further, the guide face of the battery pack pin 2 may be in the shape of a cone or truncated cone, or a spherical surface. In an allowable error range, the guide face guides the battery pack pin 2 into the pin hole in a floating state of the floating frame 1 so as to realize positioning.

The positioning further includes a retractable vehicle body pin 3 arranged on the floating frame 1. A height of the vehicle body pin 3 at a maximum extension position is consistent with a height of the battery pack pin 2, and the vehicle body pin is lower than the floating frame 1 during retraction, so that positioning of the battery pack pin 2 is not influenced. The vehicle body pin 3 is matched with a positioning hole in the vehicle body of a to-be-installed new battery pack vehicle for positioning in an extension state, so as to ensure positioning and installation accuracy of the new battery pack. In the present embodiment, two vehicle body pins 3 are installed on the floating frame 1 and respectively installed at diagonal positions of the floating frame 1. In actual applications, the installation quantity and positions of the vehicle body pins 3 may also be adjusted according to actual requirements.

Further, the vehicle body pin 3 may adopt an electric retractable pin and is simple in structure and easy to realize.

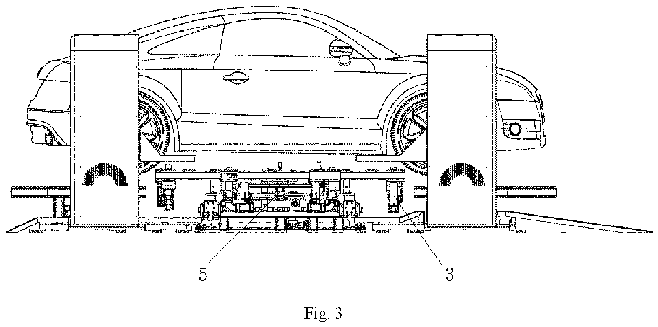

Referring to Fig. 2 and Fig. 3, the present embodiment further provides a battery swap mechanism. The battery swap mechanism may be set as a trolley form so as to conveniently walk, or fixed on a battery swap platform of a battery swap station. The battery swap mechanism includes a lifting mechanism 5, a tightening mechanism 4, a floating frame 1 and the aforementioned positioning mechanism. The tightening mechanism 4 and the above positioning pin are arranged on the floating frame 1; the floating frame 1 is arranged on the lifting mechanism 5; and the tightening mechanism 4 is lifted by utilizing the lifting mechanism 5 so as to mount/dismount and replace the battery pack. As an example, in the battery swap process, the battery swap mechanism does not need to be entirely lifted, and positioning may be realized by lift of the vehicle; and the structure is simplified, and the manufacturing cost is low. It should be indicated that, the floating frame 1 may also be of any other supporting structure capable of floating, and the shape is unlimited. In other examples, positioning can be realized by virtue of lift of the battery swap mechanism, or positioning is realized by matched lift of both the battery swap mechanism and the vehicle.

As an example, the process of performing battery swap by utilizing the positioning mechanism and the battery swap mechanism may refer to manners as follows:
1) the vehicle drives into the battery swap platform and is adjusted to a battery swap position;
2) the battery pack pin in the positioning mechanism is adjusted to be higher than the tightening mechanism, and the vehicle body pin is located in a retractable state; at the battery swap position, in the allowable error range, the guide face of the battery pack pin guides the battery pack pin into a vehicle body pin hole in the floating state, and the tightening sleeve of the tightening mechanism aligns at a bolt head, so that the battery pack is mounted/dismounted and conveyed out; and
3) when the new battery pack reaches the battery swap mechanism, at the battery swap position, the vehicle body pin extends out and is inserted into the vehicle body positioning hole, and the battery pack is installed by the tightening mechanism, thereby completing battery swap.

The above descriptions are only the preferred embodiments of the present invention, and do not limit the present invention in any form. Anyone skilled familiar with this art can make various modifications and falling within the scope of the present invention as defined by the appended claims.

## Claims

1. A positioning mechanism, comprising: a floating supporting part (1) having a floating space, and positioning pins (2, 3), wherein the positioning pins are connected to the floating supporting part (1);
the positioning pins (2, 3) comprise at least two battery pack pins (2) and at least two vehicle body pins (3), and are used for fitting with corresponding positioning holes in a battery pack and a vehicle body; and
movable ends of the positioning pins (2, 3) are configured to retract to form a guide face in the shape of a cone or truncated cone or a spherical surface, and the guide face is used for guiding the positioning pin into the corresponding positioning hole in a floating state of the floating supporting part (1), **characterized by** the fact that
the vehicle body pins (3) are retractable pins; a height of the vehicle body pins (3) at a maximum extension position is consistent with a height of the battery pack pins (2), and the vehicle body pins (3) are lower than the floating supporting part (1) during retraction; and the vehicle body pins (3) are used for being matched with the positioning holes in the vehicle body for positioning in an extension state.

2. The positioning mechanism according to claim 1, wherein the vehicle body pins (3) are electric retractable pins.

3. A battery swap mechanism, comprising a lifting mechanism (5), a tightening mechanism (4) and a positioning mechanism according to any of claims 1 and 2;
wherein the tightening mechanism (4) and the positioning mechanism are arranged on the floating supporting part (1); and
the floating supporting part (1) is arranged on the lifting mechanism (5) and is configured to float relative to the lifting mechanism (5).

## Patentansprüche

1. Positionierungsmechanismus, der Folgendes aufweist:
einen schwimmenden Stützteil (1) mit einem Schwimmraum und Positionierungsstifte (2, 3), wobei die Positionierungsstifte mit dem schwimmenden Stützteil (1) verbunden sind;
wobei die Positionierungsstifte (2, 3) mindestens zwei Batteriesatzstifte (2) und mindestens zwei Fahrzeugkarosseriestifte (3) aufweisen und zum Einpassen in entsprechende Positionierungsöffnungen in einem Batteriesatz und einer Fahrzeugkarosserie verwendet werden; und
wobei bewegliche Enden der Positionierungsstifte (2, 3) zum Einziehen zur Bildung einer Führungsfläche in Form eines Kegels oder Kegelstumpfs oder einer sphärischen Fläche konfiguriert sind und die Führungsfläche zum Führen des Positionierungsstifts in die entsprechende Positionierungsöffnung in einem schwimmenden Zustand des schwimmenden Stützteils (1) verwendet wird,
**dadurch gekennzeichnet, dass** die Fahrzeugkarosseriestifte (3) einziehbare Stifte sind; eine Höhe der Fahrzeugkarosseriestifte (3) in einer maximalen Ausziehposition mit einer Höhe der Batteriesatzstifte (2) übereinstimmt und sich die Fahrzeugkarosseriestifte (3) während des Einziehens weiter unten als der schwimmende Stützteil (1) befinden; und die Fahrzeugkarosseriestifte (3) zum Zusammenpassen mit den Positionierungsöffnungen in der Fahrzeugkarosserie zur Positionierung in einem ausgezogenen Zustand verwendet werden.

2. Positionierungsmechanismus nach Anspruch 1, wobei die Fahrzeugkarosseriestifte (3) einziehbare elektrische Stifte sind.

3. Batteriewechselmechanismus, der einen Hebemechanismus (5), einen Spannmechanismus (4) und einen Positionierungsmechanismus nach einem der Ansprüche 1 und 2 aufweist;
wobei der Spannmechanismus (4) und der Positionierungsmechanismus an dem schwimmenden Stützteil (1) angeordnet sind; und
der schwimmende Stützteil (1) an dem Hebemechanismus (5) angeordnet ist und dazu konfiguriert ist, bezüglich des Hebemechanismus (5) zu schwimmen.

## Revendications

1. Mécanisme de positionnement, comprenant : une partie de support flottante (1) comportant un espace flottant, et des goupilles de positionnement (2, 3), les goupilles de positionnement étant raccordées à la partie de support flottante (1) ;
les goupilles de positionnement (2, 3) comprenant au moins deux goupilles de bloc-batterie (2) et au moins deux goupilles de carrosserie de véhicule (3), et étant destinées à s'adapter dans des trous de positionnement correspondants dans un bloc-batterie et une carrosserie de véhicule ; et
des extrémités mobiles des goupilles de positionnement (2, 3) étant conçues pour se rétracter de façon à former une face de guidage en forme de cône ou de cône tronqué ou une surface sphérique, et la face de guidage étant destinée à guider la goupille de positionnement de sorte qu'elle pénètre dans le trou de positionnement correspondant dans un état flottant de la partie de support flottante (1),
**caractérisé en ce que**
les goupilles de carrosserie de véhicule (3) sont des goupilles rétractables ; une hauteur des goupilles de carrosserie de véhicule (3) dans une position d'extension maximale correspond à une hauteur des goupilles de bloc-batterie (2), et les goupilles de carrosserie de véhicule (3) sont situées plus bas que la partie de support flottante (1) lors de leur rétraction ; et les goupilles de carrosserie de véhicule (3) sont destinées à être accouplées avec les trous de positionnement dans la carrosserie de véhicule à des fins de positionnement dans un état d'extension.

2. Mécanisme de positionnement selon la revendication 1, dans lequel les goupilles de carrosserie de véhicule (3) sont des goupilles rétractables électriques.

3. Mécanisme d'échange de batteries, comprenant un mécanisme de levage (5), un mécanisme de serrage (4) et un mécanisme de positionnement selon l'une quelconque des revendications 1 et 2 ;
dans lequel le mécanisme de serrage (4) et le mécanisme de positionnement sont placés sur la partie de support flottante (1) ; et
la partie de support flottante (1) est placée sur le mécanisme de levage (5) et est conçue pour flotter relativement au mécanisme de levage (5).
